# EUROPEAN PATENT SPECIFICATION

(11) **EP 2 256 614 B1**
(45) Date of publication and mention of the grant of the patent: **28.12.2011**
(21) Application number: 10250907.2
(22) Date of filing: 11.05.2010
(51) Int. Cl.: G06F 3/048

(54) **Display control apparatus, display control method, and computer program**
Anzeigesteuerungsvorrichtung, Anzeigesteuerungsverfahren und Computerprogramm
Appareil de contrôle d'affichage, procédé de contrôle d'affichage et programme informatique

(30) Priority: 21.05.2009 JP 2009123414
(43) Date of publication of application: 01.12.2010
(73) Proprietor: Sony Corporation, Tokyo (JP)
(72) Inventor: Homma, Fuminori, Tokyo (JP); Nashida, Tatsushi, Tokyo (JP)
(74) Representative: Davies, Simon Robert

(56) References cited:
- US-A1- 2003 146 905
- US-A1- 2005 184 972

## Description

The present invention relates to a display control apparatus, a display control method, and a computer program.

In recent years, as a means for anyone to be able to easily perform input/output operation of information, there is often used a display/input device using a touch panel or the like, for example, in which a display surface for displaying information and an input surface for inputting operation information are layered. According to such display/input device, by a user touching an icon displayed on the display surface with a finger, input information of selecting the icon can be input, for example. However, in the case where the area of the touch panel of the display/input device is small, the display of an object such as an icon is small. Furthermore, there was an issue that in the case where there are adjacent objects, the user's finger covers the objects, so that whether a desired object is selected is difficult to be determined and misinstruction tends to occur.

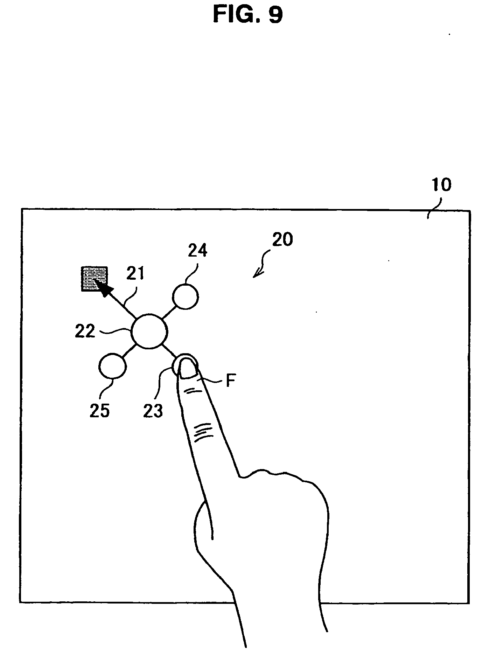

In response to such issue, there is disclosed in Japanese Patent No. 3744116 a cursor 20 indicating an object displayed on a display surface 10, such as that shown in FIG. 9, for example. The cursor 20 includes an indicating part 21 for indicating an input target coordinate, a holding part 22 for moving the indicating part 21, and a steering part 23. The user causes the indicating part 21 to be directed to a desired button by manipulating the holding part 22 and the steering part 23 with a finger F. Then, when a right input selection part 24 or a left input selection part 25 is indicated, processing associated with the button indicated by the indicating part 21 is executed. This enables precise and accurate input in a small area.

However, there were issues that the operation in the display/input device described in Japanese Patent No. 3744116 was, after all, not very different from indirect operation using a cursor, and that with the operation, it was difficult to select a selection object by directly touching it. On the other hand, there is also a method of enlarging a part on a touch panel touched by an operation tool and displaying it at a different position on the screen. According to such method, the user can select the selection object by directly touching it, but there is an issue that since the selection object is displayed at the different position, it is difficult for the user to understand a relationship between actual movement of the finger and manipulation of the information displayed at the different position.

In light of the foregoing, it is desirable to provide a display control apparatus, a display control method, and a computer program which help to check operational state when an operation object is manipulated with an operation tool and which enable the user to manipulate the operation object without a sense of discomfort.

US2003/0146905 discloses a method for selecting a function on a touchscreen using a cursor comprising a handle part and a pointing part. The handle part is arranged substantially at a point on the screen indicated by a user such that the pointing part resides at a different point on the screen. The element indicated by the pointing part is activated in response to the user selecting the element.

US2005/0184972 discloses a digital camera including a liquid crystal panel as an image display screen for displaying an image that is currently being viewed by a camera. If the image display screen is currently being covered by a user's finger, the system sets an image display area on the image display screen based on the user's finger position so that the image is not covered.

Various respective aspects and features of the invention are defined in the appended claims. Combinations of features from the dependent claims may be combined with features of the independent claims as appropriate and not merely as explicitly set out in the claims.

According to an embodiment of the present invention, there is provided a display control apparatus including a detection unit for detecting contact of an operation tool, with which a pointer indicating an input position of information is manipulated on a display unit, with a display surface of the display unit, a contact determination unit for determining contact state of the operation tool with the display surface based on a detection result by the detection unit, a contact mark display processing unit for displaying on the display unit a contact mark indicating a form of a contact area where the operation tool is in contact with the display surface, in the case where it is determined by the contact determination unit that the operation tool is in contact with the display surface, and a screen display processing unit for scrolling the screen a predetermined distance, thereby causing an object, the contact mark, and the pointer, which were previously displayed in a display area including the contact area, to be displayed near the contact area of the operation tool, in response to detecting a trigger to start displaying the object at a different position from the contact area while the operation tool is in contact with the display surface. The contact mark display processing unit changes the form of the contact mark displayed on the display unit according to a change of the contact area where the operation tool touches the display surface.

According to the present invention, when the operation tool touches the display surface, the contact mark of the operation tool is displayed on the display unit by the contact mark display processing unit. Then, when the trigger is detected while the operation tool is in contact with the display surface, the screen display processing unit causes the object, the contact mark, and the pointer displayed on the display unit to be displayed near the contact area of the operation tool. This enables the user to visually confirm the object, the contact mark, or the pointer covered by the operation tool. Then, when the contact area of the operation tool is changed, the form of the contact mark displayed on the display unit by the contact mark display processing unit is changed. By this, the user can feel a correspondence that the pointer moves by his/her manipulation even if the pointer or the like is displayed at a position different from that of the operation tool and the operability can be improved.

Here, the screen display processing unit may detect, as the trigger, that the object is displayed in the contact area or that the operation tool is in contact with the display surface for more than a predetermined time.

Moreover, when the screen display processing unit scrolls the object, the contact mark, and the pointer displayed on the display unit by a predetermined distance, the screen display processing unit may scroll up the object, the contact mark, and the pointer displayed on the display unit to a position where the contact area and the pointer are not overlapped.

Furthermore, the screen display processing unit may enlarge and display near the contact area the object, the contact mark, and the pointer displayed in the predetermined display area on the display unit in the case where the trigger is detected.

Moreover, the contact mark display processing unit can determine a position of the center of gravity of the contact mark corresponding to the center of gravity of the contact area of the operation tool. Then, the screen display processing unit displays the pointer at the closest position to the position of the center of gravity of the contact mark.

Furthermore, when it is determined by the contact determination unit that the operation tool is released from the display surface, the contact mark display processing unit can hide the contact mark which has been displayed on the display unit and the screen display processing unit can restore the display which has been changed based on the trigger.

According to another embodiment of the present invention, there is provided a display control method including the steps of detecting contact of an operation tool, with which a pointer indicating an input position of information is manipulated on a display unit, with a display surface of the display unit, determining contact state of the operation tool with the display surface based on a detection result, displaying on the display unit a contact mark indicating a form of a contact area where the operation tool is in contact with the display surface, in the case where it is determined that the operation tool is in contact with the display surface, scrolling the screen a predetermined distance, thereby causing an object, the contact mark, and the pointer, which were previously displayed in a display area including the contact area, to be displayed near the contact area of the operation tool, in response to detecting a trigger to start displaying the object at a different position from the contact area while the operation tool is in contact with the display surface, and changing the form of the contact mark displayed on the display unit according to a change of the contact area where the operation tool touches the display surface.

According to another embodiment of the present invention, there is provided a computer program for causing a computer to function as the display control apparatus described above. The computer program is stored in a storage device included in the computer, and it is read and executed by a CPU included in the computer, thereby causing the computer to function as the display control apparatus described above. Moreover, there is also provided a computer readable recording medium in which the computer program is stored. The recording medium may be a magnetic disk or an optical disk, for example

According to the embodiments of the present invention described above, there can be provided the display control apparatus, the display control method, and the computer program which enable to check operational state when the operation object is manipulated with the operation tool and which enable the user to manipulate the operation object without a sense of discomfort.

Embodiments of the invention will now be described with reference to the accompanying drawings, throughout which like parts are referred to by like references, and in which:
FIG. 1 is an explanatory diagram for explaining a display control by a display control apparatus according to a first embodiment of the present invention;
FIG. 2 is a block diagram showing a hardware configuration of the display control apparatus according to the embodiment;
FIG. 3 is a functional block diagram showing a functional configuration of the display control apparatus according to the embodiment;
FIG 4 is an explanatory diagram showing a distribution of capacitance detected by a capacitive touch sensor;
FIG 5 is a flowchart showing a display control method by the display control apparatus according to the embodiment;
FIG 6 is an explanatory diagram for explaining a display of a display unit changed according to a predetermined state;
FIG 7 is explanatory diagrams showing a contact state of a finger and a form of the contact mark in the case where the top surface of the finger touches a screen;
FIG 8 is explanatory diagrams showing a contact state of the finger and a form of the contact mark in the case where the tip of the finger touches the screen; and
FIG 9 is an explanatory diagram showing an example of a cursor of a known display/input device.

Note that, in this specification and the appended drawings, structural elements that have substantially the same function and structure are denoted with the same reference numerals, and repeated explanation of these structural elements is omitted.

In addition, the description will be made in the following order.
1. Outline of a display control by a display control apparatus
2. Configuration of the display control apparatus
3. Display control method by the display control apparatus

### < 1. Outline of a display control by a display control apparatus >

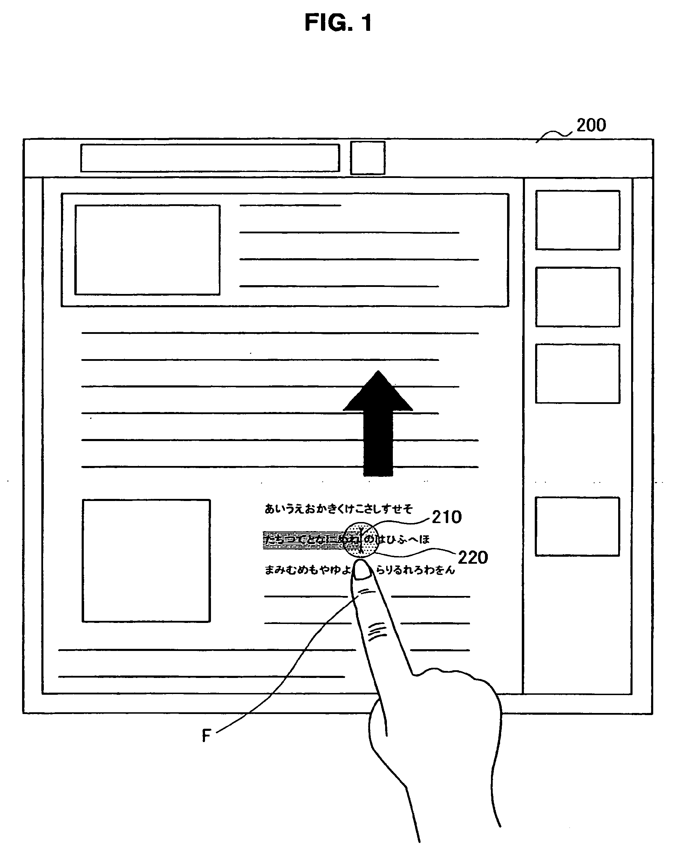

First, an outline of a display control by a display control apparatus according to an embodiment of the present invention will be described based on FIG. 1. In addition, FIG 1 is an explanatory diagram for explaining the display control by the display control apparatus according to the present embodiment.

In the present embodiment, as shown in FIG.1, there is assumed a screen 200 on which text is arranged on a web page or a page which can be scrolled as an object. On the text is displayed a caret 210 which is an input pointer indicating an input position of a character or the like. The caret 210 enables operation supported by a GUI (Graphical User Interface) of a general computer, such as designating a starting point and an ending point of the text or selecting a portion of the text. As an element which characterizes the display control apparatus according to the present embodiment, there is a GUI element, i.e., a contact mark 220 of an operation tool such as a finger. The contact mark 220 is a detailed contact form indicating a contact area where the operation tool is in contact with the screen. The display control apparatus according to the present embodiment changes a form of the contact mark 220 according to a state in which the user is in contact with the screen with a finger and reflects the state in which the user touches the screen with the finger on the contact mark 220 accurately and in real time.

That is, like a touch panel or the like, for example, the display control apparatus according to the present embodiment controls display of a display/input device capable of displaying an object such as text on a display unit as well as inputting operation information by a display surface of the display unit being touched. When the display control apparatus detects that the operation tool such as the finger F has touched the display surface, the display control apparatus causes the display unit to display, at a position touched by the finger F, the contact mark 220 indicating a form of the contact area where the finger F is in contact with the display surface. When the display control apparatus further detects a predetermined state in the state in which the operation tool is in contact with the display surface, the display control apparatus displays information, contact mark 220, and the caret 210 displayed in a predetermined area including at least the contact area in the display unit, at a position different from a contact position of the operation tool. At this time, the user can manipulate, at the contact position where the finger F touched the display surface, the object displayed at the position different from the contact position. Furthermore, as described above, the display control apparatus changes the form of the contact mark 220 with a change of the contact area of the finger F of the user with the display unit.

The contact mark 220 is created and displayed on the display unit each time the operation tool touches the screen 200 and is removed and is hidden from the display unit each time the operation tool is released. By this, even if the contact mark 220 is displayed at a position distant from the actual contact position of the operation tool, the user can recognize his/her own contact mark due to a correspondence between the actual contact state of the finger F with the display unit and the form of the contact mark 220, and the user can manipulate the caret 210 displayed at the different position from the contact position, without a sense of discomfort. In the following, a configuration of the display control apparatus according to the present embodiment and a display control method using the same will be described in detail.

### < 2. Configuration of the display control apparatus >

### [Hardware configuration]

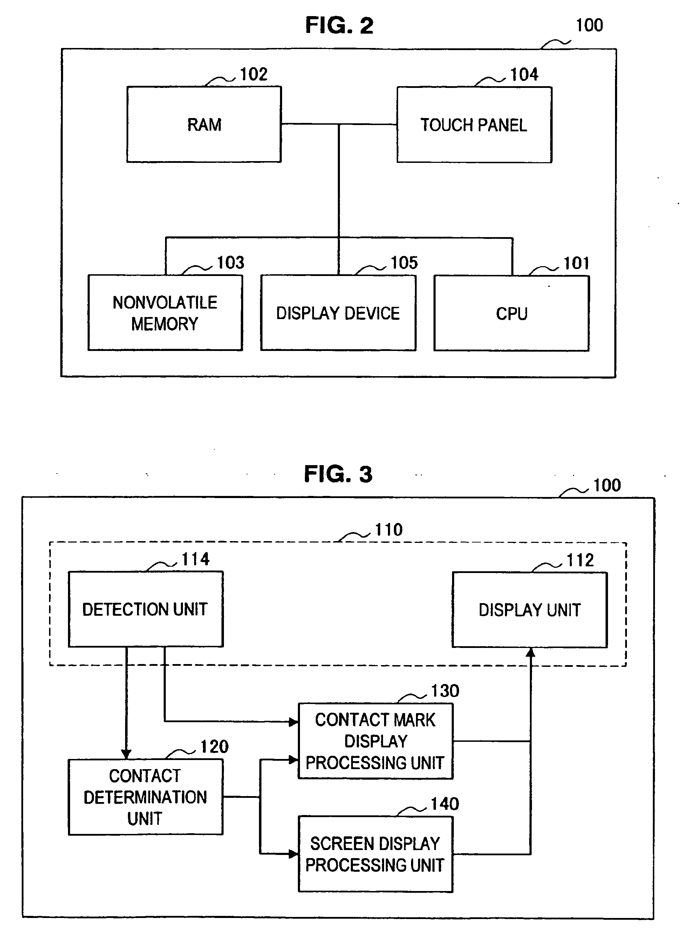

First, a hardware configuration of a display control apparatus 100 according to the present embodiment will be described based on FIG. 2. In addition, FIG. 2 is a block diagram showing the hardware configuration of the display control apparatus 100 according to the present embodiment.

The display control apparatus 100 according to the present embodiment includes a CPU (Central Processing Unit) 101, a RAM (Random Access Memory) 102, and a nonvolatile memory 103, as shown in FIG. 2. Furthermore, the display control apparatus 100 includes a touch panel 104 and a display device 105.

The CPU 101 functions as an arithmetic processing device and a control device and controls the entire operation within the display control apparatus 100 according to a variety of programs. Moreover, the CPU 101 may be a microprocessor. The RAM 102 temporarily stores therein programs used in the execution of the CPU 101 and parameters that appropriately change in the execution, and the like. These are interconnected via a host bus including a CPU bus and the like. The nonvolatile memory 103 stores therein programs, calculation parameters and the like used by the CPU 101. The nonvolatile memory 103 may be a ROM (Read Only Memory) or a flash memory, for example.

The touch panel 104 is an example of an input device for a user to input information and includes an input control circuit for generating an input signal based on input by the user and for outputting the input signal to the CPU 101. The user can input various types of data into, and give an instruction for performing processing operation to the display control apparatus 100 by operating the touch panel 104. The display device 105 is an example of an output device for outputting information. The display device 105 may be a CRT (Cathode Ray Tube) display device, a liquid crystal display (LCD) device, or an OLED (Organic Light Emitting Display) device, for example.

### [Functional configuration]

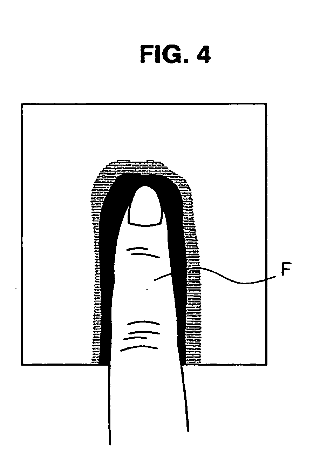

Next, a functional configuration of the display control apparatus 100 according to the present embodiment will be described based on FIG. 3 and FIG. 4. In addition, FIG 3 is a functional block diagram showing the functional configuration of the display control apparatus 100 according to the present embodiment. FIG 4 is an explanatory diagram showing a distribution of capacitance detected by a capacitive touch sensor.

The display control apparatus 100 according to the present embodiment includes a display/input unit 110, a contact determination unit 120, a contact mark display processing unit 130, and a screen display processing unit 140, as shown in FIG 3.

The display/input unit 110 is a device which displays an object such as text, an icon, or a graphic, and which is capable of manipulating the displayed object by the displayed object being touched by an operation tool. The operation tool for manipulating information of the display/input unit 110 may be a finger or a stylus, for example. The display/input unit 110 includes a display unit 112 for displaying the object, and a detection unit 114 for detecting proximity and contact of the operation tool with a display surface of the display device 112. The display unit 112 corresponds to the display device in FIG 2 and may be a liquid crystal display or an organic EL display, for example. Moreover, the detection unit 114 corresponds to the touch panel 104 in FIG 2 and may be a sensor for detecting a change in capacitance, a sensor for detecting a change in pressure on the display unit 112, or an optical sensor for detecting proximity of the operation tool by detecting a change in the amount of light (darkness of a shadow), for example.

For example, in the case where the detection unit 114 is a capacitive touch panel for detecting a change in capacitance, the touch panel can be configured by arranging capacitive sensors in a matrix form (e.g., 10x6). The touch panel constantly changes the output value of the touch panel according to a change in distance between the touch panel and an object to be detected. When a finger comes close to or touches the capacitive sensor, the capacitance detected by the capacitive sensor increases. Interaction such as tapping can be detected based on a change in the increase of the capacitance detected by the capacitive sensor. Moreover, capacitance of each of the capacitive sensors can be obtained at the same time. Accordingly, as described later, the form of the operation tool (e.g., finger F) which approaches or touches the touch panel can be obtained by detecting the changes in capacitances of all the capacitive sensors at the same time by the detection unit 114, and by interpolating the detected values by the contact mark display processing unit 130 described later. In addition, it is enough for the detection unit according to the present embodiment to detect at least contact of the operation tool with the display/input unit 110.

The detection unit 114 outputs the detected detection values, as a detection result, to the contact determination unit 120 and the contact mark display processing unit 130. In addition, in the case where the detection unit 114 is provided to the object display surface side of the display unit 112, the user operates a pointer such as a caret displayed on the display unit 112 by bringing the operation tool in contact with the detection unit 114. At this time, it is the surface of the detection unit 114 which the operation tool actually touches, but in the following, description will be made taking a surface with which the operation tool is brought into contact in this manner, as "display surface (of the display/input unit 110).

The contact determination unit 120 determines whether the operation tool touches the display surface of the display/input unit 110. For example, in the case where the detection unit 114 is a capacitive touch panel for detecting a change in capacitance, the contact determination unit 120 determines whether the operation tool touches the display surface of the display/input unit 110, based on the capacitance values detected by the detection unit 114. By using the capacitive touch panel, there can be grasped the size of the capacitance which changes according to contact or proximity of the operation tool with the display surface, as shown in FIG. 4. In FIG. 4, an area indicated in black is the contact area where the finger F is in contact with the touch panel and where the capacitance is high. On the other hand, an area indicated in white is an area where there is no finger on the touch panel and where the capacitance is low. In this manner, whether the operation tool is in contact with the touch panel is determined by the size of the capacitance detected by the touch panel. The contact determination unit 120 instructs the display processing unit 130 and the screen display processing unit 140 on which processing to perform, based on the determination result of whether the operation tool touches the display surface of the display/input unit 110.

In the case where the operation tool is in contact with the display surface of the display/input unit 110, the display processing unit 130 causes the display unit 112 to display the contact mark indicating the contact area where the operation tool is in contact with the display surface. The display processing unit 130 performs processing for causing the display unit 112 to display the contact mark, based on the instruction by the contact determination unit 120. Moreover, the display processing unit 130 performs processing of changing the form of the contact mark displayed on the display unit 112 according to the detection result detected by the detection unit 114. The display processing unit 130 outputs processed information to the display unit 112 and causes the display unit 112 to display the contact mark.

The screen display processing unit 140 controls display of the object displayed on the display unit 112. In the present embodiment, when the object displayed on the display unit 112 is covered by the operation tool in contact with the display surface of the display/input unit 110, the screen display processing unit 140 changes the display of the display unit 112. This can prevent the state in which the object displayed on the display unit 112 is covered by the operation tool and is difficult to be visually confirmed by the user at the time of manipulating the caret. The screen display processing unit 140 outputs instruction information for changing the display of the display unit 112 to the display unit 112 and causes the display unit 112 to change the display.

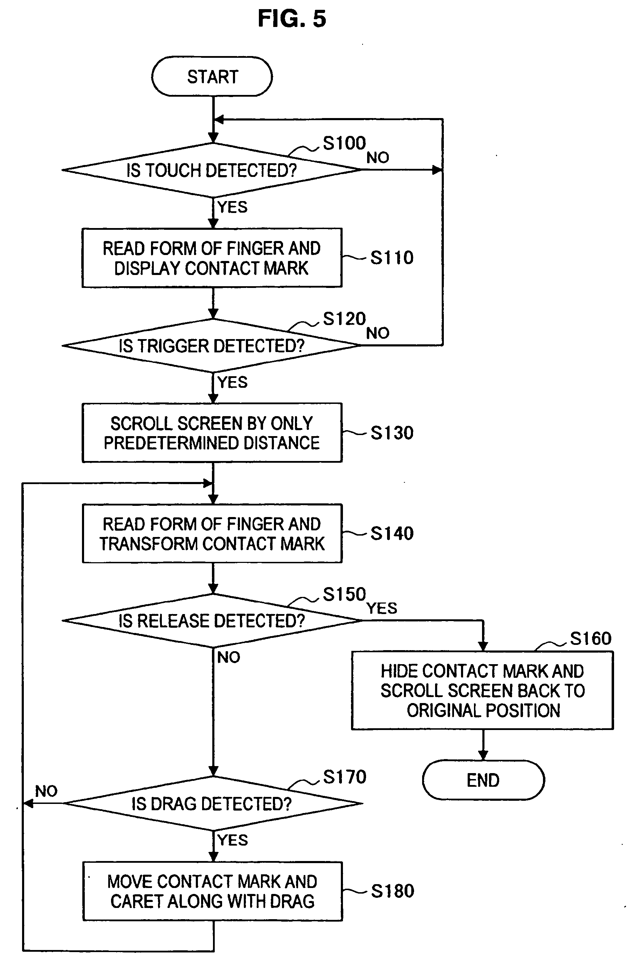

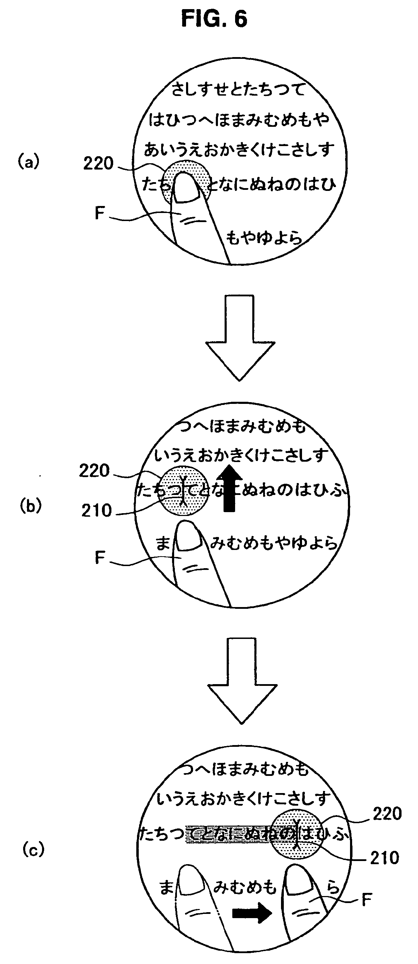

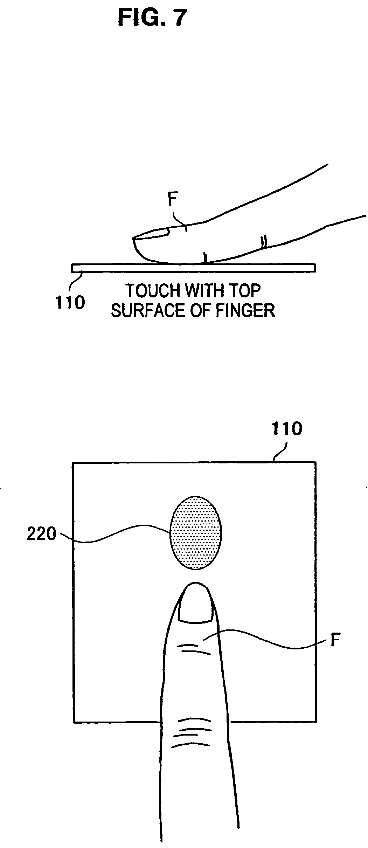

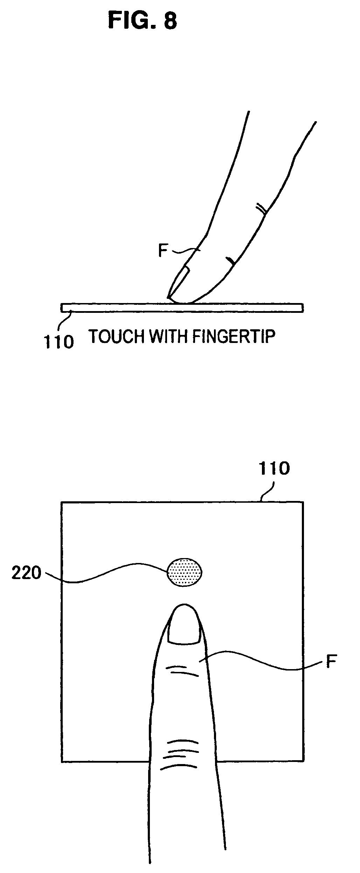

The configuration of the display control apparatus 100 according to the present embodiment has been described above. Next, a display control method by the display control apparatus 100 according to the present embodiment will be described based on FIG 5 to FIG. 8. In addition, FIG 5 is a flowchart showing the display control method by the display control apparatus 100 according to the present embodiment. FIG 6 is an explanatory diagram for explaining a display of the display unit changed according to a predetermined state. FIG 7 is explanatory diagrams showing a contact state of the finger and a form of the contact mark in the case where the top surface of the finger is in contact with a screen. FIG 8 is explanatory diagrams showing a contact state of the finger and a form of the contact mark in the case where the tip of the finger is in contact with the screen.

### < 3. Display control method by the display control apparatus >

In the display control method by the display control apparatus 100 according to the present embodiment, the contact determination unit 120 first determines whether the operation tool touches the display surface of the display/input unit 110, as shown in FIG 5 (step S100). As described above, the contact determination unit 120 can determine whether the operation tool is in contact with the display surface of the display/input unit 110 based on the detection result by the detection unit 114. For example, when the detection unit 114 is a capacitive touch panel, the contact determination unit 120 determines that the finger F touches the display/input unit 110 when the detected capacitances become greater by a predetermined value than the detection values of the capacitive sensors at the time when the finger F is not in contact with the display surface of the display/input unit 110. The contact determination unit 120 repeats the processing of the step S100 until the contact determination unit 120 determines that the finger F touches the display surface of the display/input unit 110.

When the contact determination unit 120 determines that the finger F touches the display surface of the display/input unit 110, the contact determination unit 120 causes the display processing unit 130 to display a contact mark (step S 110). The display processing unit 130 recognizes a form of the contact area where the finger F touches the display surface of the display/input unit 110 from the changes of the capacitances which are the detection result of the detection unit 114, and performs predetermined edge extraction processing and edge smoothing processing on the image. The contact mark 220 displayed on the display unit 112 is presented in the form substantially the same as or similar to the contact area of the finger F as shown in FIG 6 (a). The center of gravity of the contact mark 220 corresponds to that of the contact area. The contact mark 220 can be presented in a manner that is noticeable to the user, by putting transparent color on the area or displaying only the outline of the area. The display processing unit 130 outputs the image which has been subjected to these processing to the display/input unit 110, and causes the display unit 112 to display the same.

In addition, the caret 210 is displayed on the same position as or the closest position to the position of the center of gravity of the contact area. Although the user touches the display surface with the finger F in order to move the caret 210 to the contact area of the finger F, the caret 210 is a pointer indicating an input position of the object such as text, and a position where the caret 210 can be displayed is limited, such as to a space between characters. Since the caret 210 can not be necessarily displayed on the same position as the center of gravity of the contact area in this manner, the screen display processing unit 140 causes the caret 210 to be displayed on the same position as or the closest position to the position of the center of gravity of the contact area. By this, the caret 210 is displayed within or near the contact mark 220, and the caret 210 moves corresponding to the contact mark 220 that moves by the movement of the finger F, thereby enabling to improve the operability of the caret 210.

Next, the contact determination unit 120 determines whether there is detected a predetermined state (trigger) to start a processing of displaying the object displayed on the contact position of the finger F at a different position from the contact area (step S120). The trigger may be a predetermined movement of the user or a predetermined condition. In the present embodiment, the trigger is that information such as text is displayed on the contact position of the finger F on the display unit 112. The contact determination unit 120 can determine whether the object such as text is displayed in the contact area, from the contact position of the finger F detected by the detection unit 114 and the display state of the information on the display unit 112. While the contact determination unit 120 determines that the object is not displayed on the contact position of the finger F, the contact determination unit 120 returns to the step S100 and repeats the processing from the step S 100 to the step S120.

In addition, the predetermined state to start the processing of displaying the object displayed on the contact position of the finger F at the different position from the contact area is not limited to the above example. For example, it may be possible to take as the trigger that whether a predetermined time is counted by a count unit (not shown in figures) after the operation tool touches the display surface of the display/input unit 110 (that is, whether the finger F is held pressed against the display surface). Alternatively, it may be possible to take as the trigger that whether the area of the contact area detected by the detection unit 114 has changed by the finger F being pressed hard against the display surface. Moreover, it is also possible to provide to the display control apparatus 100 a movement determination unit (not shown in figures) for determining a gesture and take a predetermined gesture performed on the display surface as the trigger. For example, it may be possible to take as the trigger that whether there is performed the predetermined gesture such as a double tap which is to tap the display surface twice in rapid succession with a finger other than the finger F in contact with the contact surface. One or more of these states can be set as the trigger at the step S120. In the case where a plurality of trigger conditions are set, processing of step S 130 may be performed when all the conditions are satisfied or when any one of the conditions is satisfied.

On the other hand, when it is determined that the object is displayed in the contact area of the finger F, the contact determination unit 120 scrolls the entire screen displayed on the display unit 112 by only a predetermined distance and moves the display position of the object (step S130). In the present embodiment, the entire screen displayed on the display unit 112 is set as the predetermined display area including the contact area. For example, as shown in FIG 6 (a), assume that the finger F is in contact with the display surface of the display/input unit 110 and text is displayed on the contact position of the finger F. Then, the contact determination unit 120 instructs the screen display processing unit 140 to scroll the entire screen in a predetermined direction to display the text covered by the finger F. The screen display processing unit 140 scrolls the text, the caret 210, and the contact mark 220 displayed on the display unit 112 in a direction substantially opposite to the position of the wrist with respect to the finger F, for example, scrolls up the entire screen displayed on the display unit 112 as shown in FIG. 6 (b), by the predetermined distance.

Here, the predetermined distance may be a distance by the scroll of which the contact mark 220 can avoid being covered by the finger F, for example, and may be about 10 millimeters, for example. Alternatively, when the text is displayed on the display unit 112, the predetermined distance may be the bigger one of the length of the contact mark 220 and the length of the caret 210 in the height direction of the characters of the text. This enables the user to visually confirm the object that has been covered by the finger F for manipulating the caret 210.

When the screen, the caret 210, and the contact mark 220 are scrolled, the caret 210, the object, and the contact mark 220 which are operation objects are displayed at a different position from the contact position where the finger F actually touches the display surface of the display/input unit 110, as shown in FIG. 6 (b). In the meantime, the detection unit 114 the detection unit 114 continues to detect contact state of the finger F of the user and outputs the detection result to the contact determination unit 120 and the contact mark display processing unit 130. The contact mark display processing unit 130 transforms the contact mark 220 displayed on the display unit 112, based on the detection result by the detection unit 114 (step S 140). The change processing of the display of the contact mark 220 can be performed in a similar manner to the processing of the step S110.

That is, the form of the contact mark 220 changes according to the contact state of the finger F with the display surface of the display/input unit 110. For example, as shown in FIG 7, in the case where the top surface of the finger F touches the display surface of the display/input unit 110, the form of the contact mark 220 is a substantially elliptical shape extending in a longitudinal direction of the finger, and the area of the contact mark 220 (namely, the contact area of the finger F) is large. On the other hand, as shown in FIG 8, in the case where the tip of the finger F touches the display surface of the display/input unit 110, the form of the contact mark 220 is a substantially elliptical shape having the small area and extending in a width direction of the finger. In this manner, the contact area where the finger F touches the display surface of the display/input unit 110 changes depending on the manner in which the finger F touches the display surface. That is, at the step S 140, there is performed the processing of changing the form of the contact mark 220 of the finger F that is displayed at the different position from the contact area of the finger F in real time. This enables the user to manipulate the caret 210 or the object displayed at the different position from the contact area of the finger F, with a feeling as if the user were directly manipulating them.

Subsequently, the contact determination unit 120 determines whether the operation tool has been released from the display surface of the display/input unit 110 (step S150). The contact determination unit 120 can determine whether the operation tool has been released from the display surface of the display/input unit 110 based on the detection result of the detection unit 114. For example, in the case where a capacitive touch panel is used as the detection unit 114, and when the capacitances detected by the detection unit 114 are reduced compared with the last time or are substantially the same as the detection values of the capacitive sensors at the time when the finger F is not in contact therewith, it can be determined that the release operation of the operation tool has been performed.

In the case where the release operation of the operation tool is detected at the step S150, the contact mark display processing unit 130 causes the contact mark 220 to be hidden and not displayed on the display unit 112. Furthermore, the screen display processing unit 140 returning the screen which has been moved upward, back to the original position (step S160). In this manner, by hiding the contact mark 220 when the operation tool is separated from the display surface, the user can be notified of the contact state of the operation tool with the display surface. Moreover, by returning the object which has been moved, to the original position, it can be prevented that the object is moved to a position unintended by the user. Then, the display control apparatus 100 ends the display control processing shown in FIG. 5.

On the other hand, in the case where the release operation of the operation tool is not detected at the step S150, the contact determination unit 120 determines whether a drag operation of the operation is detected (step S170). The drag operation is an operation of moving the operation tool while keeping it in contact with the display/input unit 110. In the present embodiment, the drag operation is associated with selection processing of the object such as text by the caret 210. When the drag is detected by the contact determination unit 120, the contact mark display processing unit 130 and the screen display processing unit 140 cause the caret 210 and the contact mark 220 to be moved along with the drag operation (step S180).

For example, as shown in FIG. 6 (b), assume that the finger F is dragged to the right side of the screen, with the caret 210 displayed between the characters of the text displayed on the display/input unit 110. Then, as shown in FIG 6 (c), the caret 210 and the contact mark 220 displayed between the characters of the text move to the right side of the screen along with the drag operation of the finger F. Then, there is selected the text covered by the trajectory of the caret 210 moving from the position shown in FIG. 6 (b) to the position shown in FIG 6 (c). In this manner, by moving the finger F, the object displayed at the different position from the contact area of the finger F can be manipulated. When the processing of the step S180 is completed, the display control apparatus 100 returns to the step s140, and repeats the processing from the step S140. In addition, also in the case where the drag operation is not detected at the step S 170, the processing from the step S140 is repeated in the same manner.

As above, the display control method by the display control apparatus 100 according to the present embodiment has been described. With the display control method according to the present embodiment, the contact mark 220 of the operation tool is displayed on the display unit 112 based on the detection result by the detection unit 114, and at the same time, the entire screen is temporarily scrolled when the operation tool is in contact with the display surface, and the predetermined state (trigger) is further detected. Then, the caret 210 and the contact mark 220 are moved along with the movement of the operation tool. At this time, the form of the contact mark 220 displayed with the caret 210 can be freely changed according to the contact state of the operation tool. Accordingly, even if the caret 210 and the actual contact position of the operation tool are displayed at different positions, a correspondence between the operation tool and the caret 210 manipulated with the operation tool can be guaranteed. This enables the user to move the caret 210 without a sense of discomfort, as if the user were directly moving it, with the caret 210 displayed on a position not covered by the operation tool.

In addition, although in the present embodiment, description has been made taking as an example the screen 200 on which text is arranged on a web page or a page which can be scrolled, the display control method by the display control apparatus 100 according to the present embodiment can be applied to other examples. For example, the display control method by the display control apparatus 100 can be used in the case of drawing a figure by bringing the operation tool in contact with the display/input unit 110. At this time, the object displayed on the display unit can be the text which is preliminarily displayed, an icon, the figure input by the input pointer or the like.

For example, if there is covered by the operation tool for describing the figure, the input pointer indicating an input position of, for example a line, or the figure under drawing process, the user is difficult to perform detail drawing. Accordingly, in the case where a contact of the operation tool on the display surface is detected, the contact mark indicating the contact area of the operation tool is displayed on the display unit. Then, in the case where the predetermined state (trigger) is further detected in the state in which the operation tool is in contact with the display surface, the object, the input pointer, and the contact mark are temporarily moved by scrolling the screen, for example. This enables the user to describe the figure while visually confirming the input pointer which is an operation object. Moreover, since the contact mark is transformed in real time according to the contact area of the operation tool with the display surface, there can be guaranteed a correspondence between the operation tool and the input pointer displayed at the different position from the contact area of the operation tool. Accordingly, the user can move the operation tool for manipulating a pointer without a sense of discomfort by the display of the contact mark.

Although the preferred embodiments of the present invention have been described in the foregoing with reference to the drawings, the present invention is not limited thereto. It should be understood by those skilled in the art that various modifications, combinations, sub-combinations and alterations may occur depending on design requirements and other factors insofar as they are within the scope of the appended claims and the equivalents thereof.

For example, although in the above embodiment, the predetermined display area is scrolled in order to visually confirm the information covered by the operation tool, the present invention is not limited to this example. For example, the object displayed in the predetermined display area including the contact area of the operation tool can be displayed near the contact position of the operation tool as a separate screen. At this time, the object in the predetermined display area displayed on the separate screen may be enlarged. This can facilitate the visual confirmation or the manipulation of the object or the operation object

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

## Claims

1. A display control apparatus (100) comprising:
a detection unit (114) for detecting contact of an operation tool (F), with which a pointer (210) indicating an input position of information is manipulated on a display unit (112), with a display surface (200) of the display unit;
a contact determination unit (120) for determining contact state of the operation tool with the display surface based on a detection result by the detection unit:
a contact mark display processing unit (130) for displaying on the display unit a contact mark (220) indicating a form of a contact area where the operation tool is in contact with the display surface, in the case where it is determined by the contact determination unit that the operation tool is in contact with the display surface; and
a screen display processing unit (140) for scrolling the screen a predetermined distance, thereby causing an object, the contact mark, and the pointer, which were previously displayed in a display area including the contact area, to be displayed near the contact area of the operation tool, in response to detecting a trigger to start displaying the object at a different position from the contact area while the operation tool is in contact with the display surface,
wherein the contact mark display processing unit changes the form of the contact mark displayed on the display unit according to a change of the contact area where the operation tool touches the display surface.

2. The display control apparatus according to claim 1,
wherein the screen display processing unit detects, as the trigger, that the object is displayed in the contact area.

3. The display control apparatus according to claim 1,
wherein the screen display processing unit detects, as the trigger, that the operation tool is in contact with the display surface for more than a predetermined time.

4. The display control apparatus according to any preceding claim ,
wherein the screen display processing unit scrolls up the object, the contact mark, and the pointer displayed on the display unit to a position where the contact area and the pointer are not overlapped.

5. The display control apparatus according to any preceding claim,
wherein the screen display processing unit enlarges and displays near the contact area the object, the contact mark, and the pointer displayed in the predetermined display area on the display unit in the case where the trigger is detected.

6. The display control apparatus according to any preceding claim,
wherein the contact mark display processing unit determines a position of the center of gravity of the contact mark corresponding to the center of gravity of the contact area of the operation tool, and
wherein the screen display processing unit displays the pointer at the closest position to the position of the center of gravity of the contact mark.

7. The display control apparatus according to any preceding claim,
wherein when it is determined by the contact determination unit that the operation tool is released from the display surface,
the contact mark display processing unit hides the contact mark which has been displayed on the display unit, and
the screen display processing unit restores the display which has been changed based on the trigger.

8. A display control method comprising the steps of:
detecting contact of an operation tool, with which a pointer indicating an input position of information is manipulated on a display unit, with a display surface of the display unit;
determining contact state of the operation tool with the display surface based on a detection result;
displaying on the display unit a contact mark indicating a form of a contact area where the operation tool is in contact with the display surface, in the case where it is determined that the operation tool is in contact with the display surface;
scrolling the screen a predetermined distance, thereby causing an object, the contact mark, and the pointer, which were previously displayed in a display area including the contact area, to be displayed near the contact area of the operation tool, in response to detecting a trigger to start displaying the object at a different position from the contact area while the operation tool is in contact with the display surface; and
changing the form of the contact mark displayed on the display unit according to a change of the contact area where the operation tool touches the display surface.

9. A computer program for causing a computer to function as a display control apparatus and to implement all the steps of the method of claim 8.

## Patentansprüche

1. Anzeigesteuerungsvorrichtung (100), aufweisend:
eine Detektiereinheit (114) zum Detektierten eines Kontakts eines Bedienungswerkzeugs (F), mit dem ein eine Eingabeposition von Information anzeigender Zeiger (210) auf einer Anzeigeeinheit (112) manipuliert wird, mit einer Anzeigefläche (200) der Anzeigeeinheit,
eine Kontaktbestimmungseinheit (120) zur Bestimmung eines Kontaktzustands des Bedienungswerkzeugs mit der Anzeigefläche auf Basis eines Detektionsresultats von der Detektiereinheit,
eine Kontaktmarkierungsanzeigeverarbeitungseinheit (130) zur Anzeige auf der Anzeigeeinheit einer eine Form eines Kontakthereichs, bei dem das Bedienungswerkseug in Kontakt mit der Anzeigefläche ist, anzeigenden Kontaktmarkierung (220) im Fall, dass durch die Kontaktbestimmungseinheit bestimmt wird, dass das Bedienungswerkzeug in Kontakt mit der Anzeigefläche ist, und
eine Schirmanzeigeverarbeitungseinheit (140) zum Scrollen des Schirms um eine vorbestimmte Distanz, **dadurch** Veranlassen eines Objekts, der Kontaktmarkierung und des Zeigers, die vorher in einem den Kontaktbereich umfassenden Anzeigebereich angezeigt wurden, in der Nähe des Kontaktbereichs des Bedienungswerkzeugs angezeigt zu werden, in Reaktion auf Detektieren eines Triggers zum Starten einer Anzeige des Objekts an einer vom Kontaktbereich verschiedenen Position, während das Bedienungswerkzeug in Kontakt mit der Anzeigefläche ist,
wobei die Kontaktmarkierungsanzeigeverarbeitungseinheit die Form der auf der Anzeigeeinheit angezeigten Kontaktmarkierung entsprechend einer Änderung des Kontaktbereichs, bei dem das Bedienungswerkzeug die Anzeigefläche berührt, ändert.

2. Anzeigesteuerungsvorrichtung nach Anspruch 1,
wobei die Schirmanzeigeverarbeitungseinheit detektiert, als den Trigger, dass das Objekt im Kontaktbereich angezeigt wird.

3. Anzeigesteuerungsvorrichtung nach Anspruch 1,
wobei die Schirmanzeigeverarbeitungseinheit detektiert, als den Trigger, dass das Bedienungswerkzeug mehr als eine vorbestimmte Zeit in Kontakt mit der Anzeigefläche ist.

4. Anzeigesteuerungsvorrichtung nach einem der vorhergehenden Ansprüche,
wobei die Schirmanzeigeverarbeitungseinheit das Objekt, die Kontaktmarkierung und den Zeiger, die auf der Anzeigeeinheit angezeigt werden, zu einer Position nach oben scrollt, wo der Kontaktbereich und der Zeiger nicht überlappt sand.

5. Anzeigesteuerungsvorrichtung nach einem der vorhergehenden Ansprüche,
wobei die Schirmanzeigeverarbeitungseinheit das Objekt, die Kontaktmarkierung und den Zeiger, die im vorbestimmten Anzeigebereich auf der Anzeigeeinheit angezeigt werden, im Fall, dass der Trigger detektiert wird, vergrößert und nahe beim Kontaktbereich anzeigt.

6. Anzeigesteuerungsvorrichtung nach einem der vorhergehenden Ansprüche,
wobei die Kontaktmarkierungsnanzeigeverarbeitungseinheit eine Position des mit dem Schwerpunkt des Kontaktbereichs des Bedienungswerkzeugs korrespondierenden Schwerpunkts der Kontaktmarkierung bestimmt und
wobei die Schirmanzeigeverarbeitungseinheit den Zeiger bei der zur Position des Schwerpunkts der Kontaktmarkierung nächstgelegenen Position anzeigt.

7. Anzeigesteuerungsvorrichtung nach einem der vorhergehenden Ansprüche,
wobei, wenn durch die Kontaktbestimmungseinheit bestimmt wird, dass das Bedienungswerkzeug von der Anzeigefläche gelöst wird,
die Kontaktmarkierungsanzeigeverarbeitungseinheit die Kontaktmarkierung, die auf der Anzeigeeinheit angezeigt worden ist, verbirgt, und
die Schirmanzeigeverarbeitungseinheit die Anzeige, die auf Basis des Triggers geändert worden ist, wiederherstellt.

8. Anzeigesteuerungsverfahren, aufweisend die Schritte:
Detektieren eines Kontakts eines Bedienungswerkzeugs, mit dem ein eine Eingabeposition von Information anzeigender Zeiger auf einer Anzeigeeinheit manipuliert wird, mit einer Anzeigefläche der Anzeigeeinheit,
Bestimmen eines Kontaktzustands des Bedienungswerkzeugs mit der Anzeigefläche auf Basis eines Detektionsresultats,
Anzeigen auf der Anzeigeeinheit einer eine Form eines Kontaktbereichs, bei dem das Bedienungswerkzeug im Kontakt mit der Anzeigefläche ist, anzeigenden Kontaktmarkierung im Fall, dass bestimmt wird, dass das Bedienungswerkzeug in Kontakt mit der Anzeigefläche ist,
Scrollen des Schirms um eine vorbestimmte Distanz, **dadurch** Veranlassen eines Objekts, der Kontaktmarkierung und des Zeigers, die vorher in einem den Kontaktbereich umfassenden Anzeigebereich angezeigt wurden, nahe beim Kontaktbereich des Bedienungswerkzeugs angezeigt zu werden, in Reaktion auf Detektieren eines Triggers zum Starten einer Anzeige des Objekts bei einer vom Kontaktbereich differenten Position, während das Bedienungswerkzeug in Kontakt mit der Anzeigefläche ist, und
Ändern der Form der auf der Anzeigeeinheit angezeigten Kontaktmarkierung entsprechend einer Änderung des Kontaktbereichs, bei dem das Bedienungswerkzeug die Anzeigefläche berührt.

9. Computerprogramm zum Veranlassen eines Computers, als eine Anzeigesteuerungsvorrichtung und zum Implementierten aller Schritte des Verfahrens nach Anspruch 8 zu funktionieren.

## Revendications

1. Dispositif de commande d'affichage (100) comprenant :
une unité de détection (114) pour détecter le contact d'un outil fonctionnel (F) avec lequel est manipulé un pointeur (210) indiquant une position d'entrée d'informations sur une unité d'affichage (112), avec une surface d'affichage (200) de l'unité d'affichage ;
une unité de détermination de contact (120) pour déterminer l'état de contact de l'outil fonctionnel avec la surface d'affichage, en se basant sur le résultat de détection de l'unité de détection ;
une unité de traitement d'affichage de marque de contact (130) pour afficher sur l'unité d'affichage une marque de contact (220) indiquant la forme d'une zone de contact, où l'outil fonctionnel est en contact avec la surface d'affichage, dans le cas où l'unité de détermination de contact a déterminé que l'outil fonctionnel est en contact avec la surface d'affichage ; et
une unité de traitement d'affichage d'écran (140) pour faire défiler l'écran d'une distance prédéterminée, provoquant ainsi l'affichage d'un objet, de la marque de contact et du pointeur, qui étaient précédemment affichés dans une zone d'affichage incluant la zone de contact, près de la zone de contact de l'outil fonctionnel, en réponse à la détection d'un déclenchement pour démarrer l'affichage de l'objet dans une position différente par rapport à la zone de contact, pendant que l'outil fonctionnel est en contact avec la surface d'affichage,
dans lequel l'unité de traitement d'affichage de marque de contact modifie la forme de la marque de contact affichée sur l'unité d'affichage en fonction de la modification de la zone de contact où l'outil fonctionnel touche la surface d'affichage.

2. Dispositif de commande d'affichage selon la revendication 1, dans lequel l'unité de traitement d'affichage d'écran détecte, en tant que déclenchement, que l'objet est affiché dans la zone de contact.

3. Dispositif de commande d'affichage selon la revendication 1, dans lequel l'unité de traitement d'affichage d'écran détecte, en tant que déclenchement, que l'outil fonctionnel est en contact avec la surface d'affichage pendant une durée supérieure à une durée prédéterminée.

4. Dispositif de commande d'affichage selon l'une quelconque des revendications précédentes,
dans lequel l'unité de traitement d'affichage d'écran fait défiler vers le haut l'objet, la marque de contact et le pointeur affichés sur l'unité d'affichage, jusqu'à une position où la zone de contact et le pointeur ne sont pas superposés.

5. Dispositif de commande d'affichage selon l'une quelconque des revendications précédentes,
dans lequel l'unité de traitement d'affichage d'écran agrandit et affiche près de la zone de contact l'objet, la marque de contact et le pointeur affichés dans la zone d'affichage prédéterminée sur l'unité d'affichage dans le cas où le déclenchement est détecté.

6. Dispositif de commande d'affichage selon l'une quelconque des revendications précédentes,
dans lequel l'unité de traitement d'affichage de marque de contact détermine la position du centre de gravité de la marque de contact correspondant au centre de gravité de la zone de contact de l'outil fonctionnel, et
dans lequel l'unité de traitement d'affichage d'écran affiche le pointeur dans la position la plus proche de la position du centre de gravité de la marque de contact.

7. Dispositif de commande d'affichage selon l'une quelconque des revendications précédentes,
dans lequel l'unité de détermination de contact détermine que l'outil fonctionnel ne se trouve plus sur la surface d'affichage,
l'unité de traitement d'affichage de marque de contact cache la marque de contact qui a été affichée sur l'unité d'affïchage, et
l'unité de traitement d'affichage d'écran rétablit l'affichage qui a été modifié en se basant sur le déclenchement.

8. Procédé de commande d'affichage comprenant les étapes consistant à :
détecter le contact d'un outil fonctionnel avec lequel est manipulé un pointeur indiquant une position d'entrée d'informations sur une unité d'affichage, avec une surface d'affichage de l'unité d'affichage ;
déterminer un état de contact de l'outil fonctionnel avec la surface d'affichage, en se basant sur le résultat de la détection ;
afficher sur l'unité d'affichage une marque de contact indiquant la forme d'une zone de contact où l'outil fonctionnel est en contact avec la surface d'affichage, dans le cas où l'unité de détermination de contact détermine que l'outil fonctionnel est en contact avec la surface d'affichage ;
faire défiler l'écran d'une distance prédéterminée, provoquant ainsi l'affichage d'un objet, de la marque de contact et du pointeur, qui étaient précédemment affichés dans une zone d'affichage incluant la zone de contact, près de la zone de contact de l'outil fonctionnel, en réponse à la détection d'un déclenchement pour démarrer l'affichage de l'objet dans une position différente par rapport à la zone de contact, pendant que l'outil fonctionnel est en contact avec la surface d'affichage, et
modifier la forme de la marque de contact affichée sur l'unité d'affichage en fonction de la modification de la zone de contact ou l'outil fonctionnel touche la surface d'affichage.

9. Programme informatique pour faire fonctionner un ordinateur comme un dispositif de commande d'affichage et pour mettre en oeuvre toutes les étapes du procédé selon la revendication 8.
